# EUROPEAN PATENT APPLICATION

(11) **EP 4 631 648 A1**
(43) Date of publication of application: **15.10.2025**
(21) Application number: 25169397.4
(22) Date of filing: 09.04.2025
(51) Int. Cl.: B22F 5/00, B22F 5/04, B22F 7/06, B22F 7/08, B22F 10/66, B23K 26/342, B23P 6/00, B33Y 10/00, B33Y 40/20, F01D 5/34, B22F 10/25, B22F 10/28, B33Y 80/00

(54) **RAW MATERIAL BUILD-UP USING ADDITIVE MANUFACTURING**

(30) Priority: 10.04.2024 US 202418631522
(71) Applicant: PRATT & WHITNEY CANADA CORP., Longueuil, Québec J4G 1A1 (CA)
(72) Inventor: SZCZESNOWICZ, Piotr, (01BE5) Longueuil, J4G 1A1 (CA); IVAKITCH, Richard, (01BE5) Longueuil, J4G 1A1 (CA)
(74) Representative: Dehns

(57) **Abstract**

A method for fabricating a component (10) from a hybrid raw material, comprising the steps of: forging a first portion of a raw material for the component; additive manufacturing a second portion (24) of a raw material to the first portion to produce a hybrid raw material; and machining the hybrid raw material to produce the component (10). A repair method is also disclosed.

## Description

### FIELD

The present disclosure relates to a method for manufacturing components, for example components of gas turbine engines and other industrial machinery.

### BACKGROUND

When machining parts from forgings, bars, blocks, or any other solid form of the required alloy, there is typically wasted material where the raw material had to encompass part features that protrude from the main volume of the part.

Further, forgings are limited in their complexity.

On the other hand, creating large parts using additive manufacturing is expensive in terms of time and cost, and therefore does not scale well from low to high volume production.

Additionally, there is a possibility of parts or components being discarded due to localized manufacturing defects or field damage.

### SUMMARY OF THE DISCLOSURE

From one aspect, there is provided a method for fabricating a component from a hybrid raw material that comprises the steps of: forging a first portion of a raw material for the component; additive manufacturing a second portion of a raw material to the first portion to produce a hybrid raw material; and machining the hybrid raw material to produce the component.

In a non-limiting configuration, the component has a contour, and the hybrid raw material exceeds the contour.

In another non-limiting configuration, the contour includes a protruding portion from a main body, and wherein the additive manufacturing step produces the second portion encompassing the protruding portion.

In still another non-limiting configuration, the component, after the machining, has a boss comprising a first boss portion made of material from the first portion and a second boss portion made of material from the second portion.

In a further non-limiting configuration, the first portion comprises a solid alloy selected from the group consisting of alloys based on titanium, nickel, aluminum and combinations thereof.

In a still further non-limiting configuration, the second portion comprises a material selected from the group consisting of titanium, nickel, aluminum and combinations thereof.

In another non-limiting configuration, the method further comprises treating a surface of the first portion to remove impurities to provide a treated surface and then additive manufacturing the second portion to the treated surface of the first portion.

In still another non-limiting configuration, the first portion encompasses at least about 75% of a volume of the component.

In a further non-limiting configuration, the first portion encompasses at least 90% of a volume of the component.

In a still further non-limiting configuration, the first portion encompasses between 90 and 95% of a volume of the component.

In another non-limiting configuration, the component is selected from the group consisting of cases, rotors, stators, vanes, blades, brackets and combinations thereof.

In still another non-limiting configuration, the machining step is selected from the group consisting of turning on a lathe, milling such, Electrical Discharge Machining (EDM) and combinations thereof.

In a further non-limiting configuration, the machining step comprises machining both the first portion and the second portion.

There is also provided a method for repairing a component that comprises the steps of: producing a first portion of a raw material for the component from a part to be repaired; additive manufacturing a second portion of a raw material to the first portion to produce a hybrid raw material; and machining the hybrid raw material to produce a repaired component.

In a non-limiting configuration, the producing step comprises removing a portion of the part to be repaired to produce the first portion.

In another non-limiting configuration, the additive manufacturing step comprises adding the second portion in a position of the portion of the part that was removed.

In still another non-limiting configuration, the component has a contour, and the hybrid raw material exceeds the contour.

In a further non-limiting configuration, the contour includes a protruding portion from a main body, and wherein the additive manufacturing step produces the second portion encompassing the protruding portion.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 is a perspective view of a non-limiting example of a component to be manufactured using the disclosed method;
FIG. 2 is a top view of the component of FIG. 1;
FIG. 3 is a sectional view of the component of FIG. 1;
FIG. 4 illustrates a first component according to a non-limiting configuration of the disclosed method;
FIG. 5 illustrates a hybrid raw material having both first and second components according to a non-limiting configuration of the disclosed method;
FIG. 6 illustrates a machining step to produce the desired final component from the hybrid raw material;
FIG. 7 illustrates a component in need of repair;
FIG. 8 illustrates a prepared component to be repaired wherein a damaged boss or extending structure is removed.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

This disclosure relates to manufacture of components such as those of gas turbine engines and other industrial machinery. These components can be large and can also have features or details that extend from the main body of the component.

When forging such components, there is the tendency toward potentially large amounts of wasted material to build up the raw block of material sufficiently to allow machining down to the desired structure. On the other hand, additive manufacturing can allow such details to be readily fabricated, but when used with large components, additive manufacturing is expensive in terms of time and cost and, therefore, does not scale well from low to high volume production.

The present disclosure produces components from a hybrid raw material block wherein the base or first portion of the component can be a forging, bar, block or other solid form of the required alloy, and then a second portion can be added to the first portion in the area of the extending or protruding feature using additive manufacturing. This results in a hybrid raw material block that can then be machined down to the final component as desired. This machining involves machining both the first and second portions to produce the final component.

It should be appreciated that this method avoids the use of potentially expensive additive manufacturing for the majority of the large component, while avoiding the waste and unwieldy forging of sufficient material to produce the extending or protruding portion of the final component.

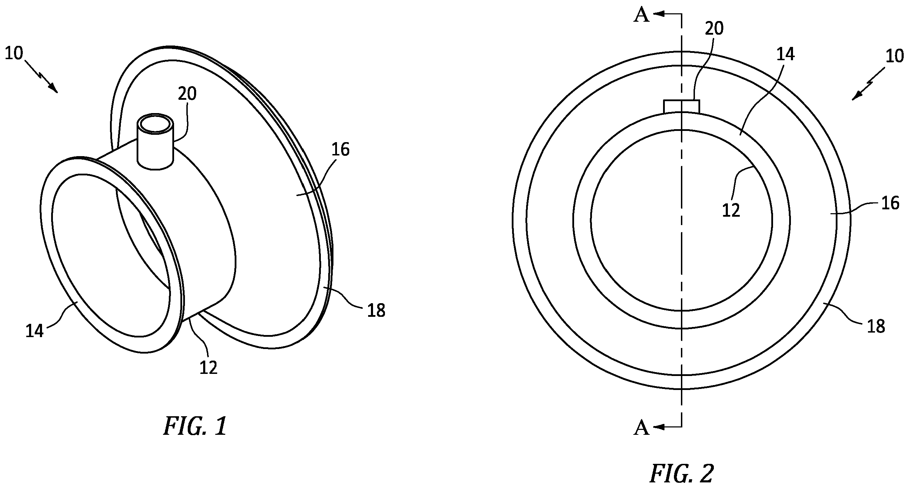

FIGS. 1-3 illustrate different views of a component to be manufactured according to the disclosed method. FIG. 1 shows the component 10 having a cylindrical portion 12, a rim or flange 14 on one end of cylinder 12, a substantially conical skirt portion 16 and another rim or flange 18 at the end of skirt portion 16. Along cylinder 12, component 10 has an outwardly protruding pipe or flow portion 20. Manufacturing this pipe 20 from an entirely forged base component would require a significant amount of excess material. On the other hand, the overall component 10 is of sufficient size that additive manufacturing the entire component is problematic.

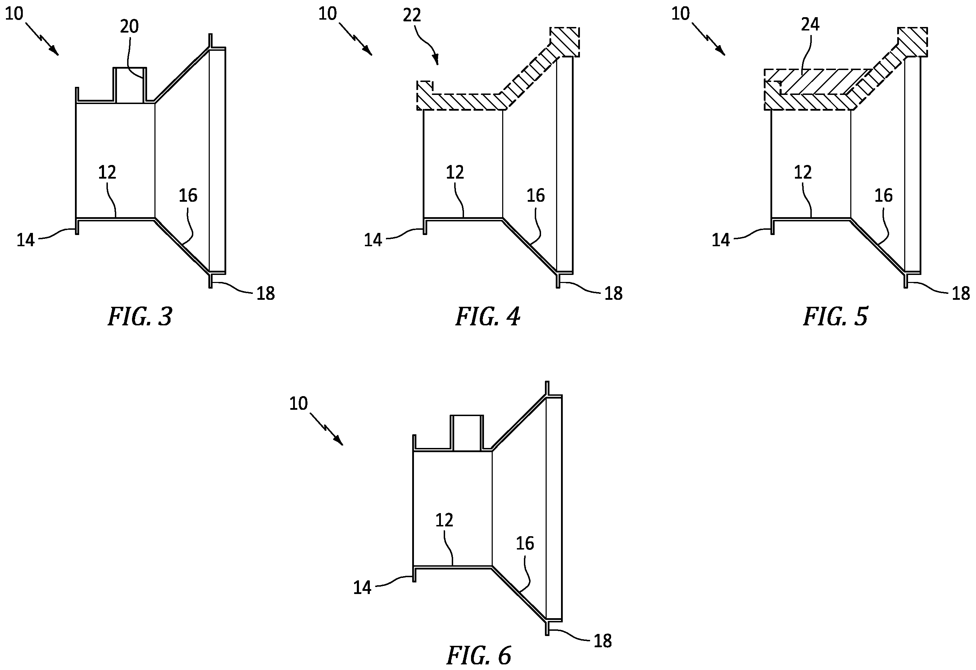

FIGS. 2 and 3 further illustrate the described portions of component 10.

FIG. 4 shows a first portion 22 that can be fabricated using forging or other such processes. The upper portion of FIG. 4 shows this first portion 22 as a forging that extends beyond the intended wall size of component 10. The lower portion of FIG. 4 shows the component in final form, but this portion of component 10 can also be of larger thickness similar to what is shown in the upper portion of FIG. 4.

Turning to FIG. 5, a second portion 24 can then be added, for example using additive manufacturing. This second portion encompasses the area where the protruding or extending portion is to be, in this case pipe 20. By adding the second component 24 with additive manufacturing, material can be added only to this portion of the first component 22 such that excessive material around the entire circumference of first component 22 can be avoided. This step results in a hybrid raw material block from which the final component as desired can then be machined.

FIG. 6 schematically illustrates such a machining step such that the result is the desired component as also shown in FIG. 3.

The materials used for the forging or first component 22 can be any suitable alloy material such as alloys based on titanium (e.g., Ti-6-2-4-2/AMS 4976 or Ti-6-4/AMS 4928), nickel, aluminum and combinations thereof. The materials used for the second component 24 which is additive manufactured can be the same or different, and examples of suitable materials similarly include titanium (e.g., Ti-6-2-4-2/AMS 4976 or Ti-6-4/AMS 4928), nickel, aluminum and combinations or alloys thereof in suitable form for additive manufacturing.

The additive manufacturing process can be any process known to persons skilled in the art. Two non-limiting examples of such processes include directed energy deposition (DED) and powder bed fusion.

Standard machining can be used to remove excess material as shown schematically in FIG. 6. Non-limiting examples of such machining techniques include turning, such as on a manual lathe or Computer Numerical Control (CNC) lathe, milling such as on a manual mill or CNC mill, and Electrical Discharge Machining (EDM). It should be appreciated that the machining will involve machining of both first and second positions, that is, machining both forded and additive manufactured portions, to complete the desired final product.

In one non-limiting configuration, it may be desirable to treat a surface of the forging or first component 22 before additive manufacturing on the second portion 24 so as to help ensure good bonding of the additive manufactured portion to the forging. This may be useful when there is a layer of impurities on the outer layer of the forging. In this case, it may be useful to machine away this layer to provide a treated surface where the impurities are removed in at least the area where the additive manufactured portion would be added. The additive manufactured portion can then be added to the treated surface.

It should be appreciated that the disclosed method can be used to fabricate components from a hybrid block of raw material wherein the first component encompasses at least 75% by volume of the overall component, and in another non-limiting configuration can encompass at least 90% of the volume of the component, with the balance being the portion that is additive manufactured. This helps to provide the overall component with a minimum amount of additive manufacturing and also with a minimum amount of wasted excess material in the first portion. In one further non-limiting configuration, the amount of the first portion can encompass between 90 and 95%.

The component for which the disclosed method of manufacture is to be used can be any suitable article of manufacture, but one particularly well suited type of component is relatively large, and has at least one protruding feature or portion. Non-limiting examples of such components can include cases, rotors, stators, vanes, blades, brackets and combinations thereof.

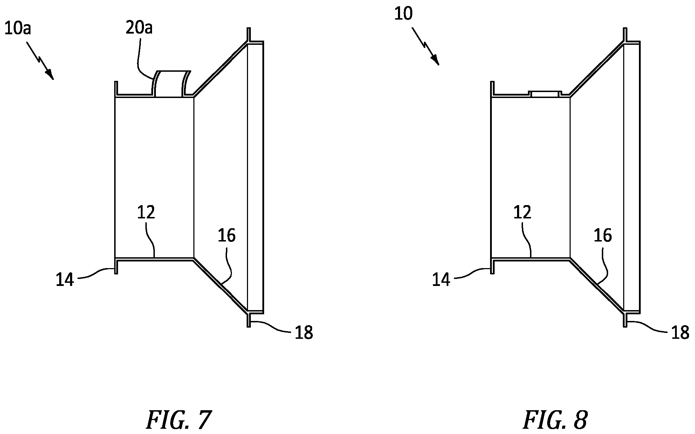

The present method can also be used in the repair of components that are worn or damaged. FIG. 7 shows a component 10a which has damage to pipe 20a. In order to repair the part, the damaged pipe 20 can be removed and then a second portion of additive manufactured material can be deposited on the component so that machining can produce a new pipe 20 as shown in FIG. 6. Thus, FIG. 8 shows removal of damaged pipe 10a, and the process can then continue as shown and discussed above from FIG. 5. It should be appreciated that in this instance, a new forging of the first portion is not necessary, and thus, the additive manufactured material can be added directly to the remaining component after removal of damaged pipe 10a.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A method for fabricating a component (10) from a hybrid raw material, comprising the steps of:
forging a first portion (22) of a raw material for the component (10);
additive manufacturing a second portion (24) of a raw material to the first portion (22) to produce a hybrid raw material; and
machining the hybrid raw material to produce the component (10).

2. The method of claim 1, wherein the component (10), after the machining, has a boss comprising a first boss portion made of material from the first portion (22) and a second boss portion made of material from the second portion (24).

3. The method of claim 1 or 2, wherein the first portion (22) comprises a solid alloy selected from the group consisting of alloys based on titanium, nickel, aluminum and combinations thereof.

4. The method of any preceding claim, wherein the second portion (24) comprises a material selected from the group consisting of titanium, nickel, aluminum and combinations thereof.

5. The method of any preceding claim, further comprising treating a surface of the first portion (22) to remove impurities to provide a treated surface and then additive manufacturing the second portion (24) to the treated surface of the first portion (22).

6. The method of any preceding claim, wherein the first portion (22) encompasses at least about 75% of a volume of the component (10), optionally at least 90% of a volume of the component (10).

7. The method of any of claims 1 to 5, wherein the first portion (22) encompasses between 90 and 95% of a volume of the component (10).

8. The method of any preceding claim, wherein the component (10) is selected from the group consisting of cases, rotors, stators, vanes, blades, brackets and combinations thereof.

9. The method of any preceding claim, wherein the machining step is selected from the group consisting of turning on a lathe, milling such, Electrical Discharge Machining (EDM) and combinations thereof.

10. The method of any preceding claim, wherein the machining step comprises machining both the first portion (22) and the second portion (24).

11. A method for repairing a component (10a, 10), comprising the steps of:
producing a first portion (22) of a raw material for the component (10) from a part to be repaired (10a);
additive manufacturing a second portion (24) of a raw material to the first portion (22) to produce a hybrid raw material; and
machining the hybrid raw material to produce a repaired component (10).

12. The method of claim 11, wherein the producing step comprises removing a portion (20a) of the part to be repaired (10a) to produce the first portion (22).

13. The method of claim 12, wherein the additive manufacturing step comprises adding the second portion (24) in a position of the portion (20a) of the part (10a) that was removed.

14. The method of any preceding claim, wherein the component (10a, 10) has a contour, and the hybrid raw material exceeds the contour.

15. The method of claim 14, wherein the contour includes a protruding portion (14, 18) from a main body (12, 16), and wherein the additive manufacturing step produces the second portion (24) encompassing the protruding portion (14, 18).
